# EUROPÄISCHE PATENTANMELDUNG

(11) **EP 4 525 105 A1**
(43) Veröffentlichungstag der Anmeldung: **19.03.2025**
(21) Anmeldenummer: 24199898.8
(22) Anmeldetag: 12.09.2024
(51) Int. Cl.: H01M 8/04007, H01M 8/04225

(54) **BRENNSTOFFZELLENSYSTEM MIT EINEM ZWEI-PHASEN-KÜHLSYSTEM MIT BYPASS-LEITUNG**

(30) Priorität: 13.09.2023 DE 102023124699
(71) Anmelder: Aerostack GmbH, 72581 Dettingen an der Erms (DE)
(72) Erfinder: SCHUDY, Markus, 72581 Dettingen an der Erms (DE); BUNTZ, Marcus-Benedict, 72581 Dettingen an der Erms (DE); ZIEGLER, Christoph, 72581 Dettingen an der Erms (DE)
(74) Vertreter: LKGLOBAL Lorenz & Kopf Patentanwalt Attorney at Law PartG mbB

(57) **Zusammenfassung**

Es ist ein Brennstoffzellensystem (10) mit einem Zwei-Phasen-Kühlsystem angegeben, aufweisend:
mindestens eine Brennstoffzelle (12) mit einem Kühlmitteleingang (14) und einem Kühlmittelausgang (16),
einen Kondensator (26), wobei der Kondensator (26) mit dem Sammler (18) in Fluidverbindung steht, und eingerichtet ist, das Kühlmittel zu kondensieren und zu unterabzukühlen,
eine Bypass-Leitung (28) aufweisend eine Pumpe (30),
wobei die Bypass-Leitung (28) mit dem Kühlmittelausgang (16) und dem
Kühlmitteleingang (14) in Fluidverbindung steht und eingerichtet ist, das
Kühlmittel der Brennstoffzelle (12) mittels einer Pumpe (30) zurückzuführen.

## Beschreibung

### Gebiet der Erfindung

Die vorliegende Beschreibung betrifft allgemein das technische Gebiet der Luftfahrt. Insbesondere betrifft die Beschreibung ein Brennstoffzellensystem mit einer ZweiPhasenkühlung mit einer Bypass-Leitung und ein Luftfahrzeug aufweisend ein derartiges Brennstoffzellensystem.

### Hintergrund der Erfindung

Brennstoffzellen sind eine mögliche Lösung zur Stromerzeugung in Flugzeugantriebssystemen oder die emissionsfreie Bordstromversorgung (APU = Auxiliary Power Unit) ohne unerwünschte Emissionen. Polymer-Elektrolyt-Brennstoffzellen (PEMFC) erzeugen Energie und Strom durch die elektrochemische Reaktion von Wasserstoff und Sauerstoff zu Wasser. Bei dieser Reaktion entsteht zwangsläufig Wärme, die abgeführt werden muss. In kommerziellen Brennstoffzellenstapeln wird dies über eine Flüssigkeitskühlung realisiert.

Eine potenzielle Alternative mit erheblichem Gewichtsreduktionspotenzial auf Systemebene ist der Ersatz der Flüssigkeitskühlung durch eine Zweiphasenkühlung. Hierbei wird die latente Verdampfungswärme genutzt, um große Wärmemengen von den Brennstoffzellen abzuführen. Zusätzlich verbessert der hohe Wärmeübergangskoeffizient im Vergleich zur Einphasenkühlung die Leistung des thermischen Managementsystems. Die Zweiphasenkühlung beruht auf den Phasenübergängen im Verdampfer (Brennstoffzellen) sowie im Wärmetauscher zur Umgebung (Kondensator). Um das Kühlmittel zur Brennstoffzelle pumpen zu können, ist es notwendig, dass das Kühlmittel unterkühlt ist, d.h. sich im flüssigen Zustand befindet (Vermeidung von Kavitation der Pumpe). Unterkühlung bezieht sich dabei auf den Temperaturbereich unterhalb des Siedepunkts des Kühlmittels. Das unterkühlte Kühlmittel gelangt dann in die Brennstoffzelle, wo seine Temperatur erhöht wird und das Sieden des Kühlmittels einsetzt. Das Vorhandensein dieses steilen Temperaturgefälles in der Einlaufzone kann für die Brennstoffzelle schädlich sein. Zu niedrige Temperaturen in diesem Bereich können zu Kondensation von Wasser in den Gaskanälen (Überflutung) führen. Um dieses und andere Risiken zu bewältigen, wird in der Regel ein Vorwärmer oder Rekuperator vor dem Verdampfer (Brennstoffzelle) eingesetzt. Dieser Vorwärmer/Rekuperator kann jedoch prohibitiv groß sein und die Gewichtsvorteile der Zweiphasenkühlung verringern.

### Zusammenfassung der Erfindung

Es kann als Aufgabe der Erfindung betrachtet werden, ein Brennstoffzellensystem mit reduziertem Gewicht bereitzustellen.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist ein Brennstoffzellensystem mit einem Zwei-Phasen-Kühlsystem angegeben. Das Brennstoffzellensystem weist mindestens eine Brennstoffzelle mit einem Kühlmitteleingang und einem Kühlmittelausgang auf. Ferner einen Sammler, wobei der Sammler mit der Brennstoffzelle in Fluidverbindung steht und eingerichtet ist, aus der Brennstoffzelle strömendes Kühlmittel in einer Gasphase in einem ersten Abschnitt und einer flüssigen Phase in einem zweiten Abschnitt zu beinhalten. Ferner einen Kondensator, wobei der Kondensator mit dem Sammler in Fluidverbindung steht, und eingerichtet ist, das Kühlmittel zu kondensieren und zu unter kühlen. Ferner eine Bypass-Leitung aufweisend eine Pumpe, wobei der Kühlmitteleingang über die Bypass-Leitung mit dem Kühlmittelausgang in Fluidverbindung steht.

Ein Brennstoffzellensystem im Sinne der Erfindung ist eine technologische Einheit, die aus mehreren Komponenten besteht und zur Umwandlung chemischer Energie in elektrische Energie mittels elektrochemischer Reaktionen dient. Es umfasst in der Regel eine oder mehrere Brennstoffzellen, die als elektrochemische Zellen fungieren und die Hauptkomponente des Systems darstellen. Zusätzlich beinhaltet das System weitere Komponenten wie einen Brennstoffzufuhrmechanismus, einen Oxidationsmittelzufuhrmechanismus, eine Elektrolytlösung, Elektroden, einen Katalysator und eine elektrische Verbindung.

Das Brennstoffzellensystem nutzt eine chemische Reaktion zwischen einem Brennstoff und einem Oxidationsmittel, typischerweise Wasserstoff und Sauerstoff, um elektro-chemischen Strom zu erzeugen. Dabei entsteht Wasser als einziges Abfallprodukt, wodurch das Brennstoffzellensystem als umweltfreundliche Energiequelle gilt. Die erzeugte elektrische Energie kann dann zur Versorgung von elektrischen Geräten, Fahrzeugen oder zur Stromerzeugung in verschiedenen Anwendungen genutzt werden.

Ein Zwei-Phasen-Kühlsystem im Sinne der Erfindung ist eine Kühllösung, die darauf abzielt, große Wärmemengen effizient abzuführen, indem es den Phasenübergang von Flüssigkeit zu Dampf nutzt. Es wird häufig in Situationen eingesetzt, in denen herkömmliche einphasige Kühlsysteme an ihre Grenzen stoßen und nicht ausreichend Wärmeableitung bieten können.

Bei einem Zwei-Phasen-Kühlsystem wird ein Kühlmittel verwendet, das bei geeigneten Temperaturen und Drücken sowohl in flüssiger als auch in gasförmiger Form existieren kann. Das Kühlmittel nimmt Wärme von der zu kühlenden Quelle auf und verdampft, wodurch es von flüssigem Zustand in einen gasförmigen Zustand übergeht. Der entstehende Dampf nimmt dabei große Mengen an Wärme auf.

Der Phasenwechsel von Flüssigkeit zu Dampf ermöglicht eine effektive Wärmeübertragung, da die Verdampfung ein höheres Wärmeübertragungspotenzial aufweist als die konvektive Flüssigkühlung. Dies führt zu einer verbesserten Kühlleistung und einer effizienteren Wärmeableitung.

Ein Zwei-Phasen-Kühlsystem besteht in der Regel aus einem Verdampfer, in dem das Kühlmittel Wärme aufnimmt und verdampft, und einem Kondensator, in dem der Dampf wieder kondensiert und die Wärme abgibt. Das Kondensat wird dann zurück in den Verdampfer geleitet, um den Kühlkreislauf fortzusetzen.

Diese Art von Kühlsystem wird in verschiedenen Anwendungen eingesetzt, einschließlich der Kühlung von Hochleistungselektronik, Prozessoren, Brennstoffzellen, Motoren und anderen thermisch anspruchsvollen Systemen, bei denen eine effiziente Wärmeableitung von großer Bedeutung ist.

Ein Sammler im Sinne der Erfindung ist ein Bauteil oder eine Vorrichtung, die dazu dient, eine Phasentrennung zwischen Gas- und Flüssigphase aufgrund der Schwerkraft durchzuführen.

In einem Sammler werden eine oder mehrere Strömungen, die Gas und Flüssigkeit enthalten, kombiniert oder zugeführt. Durch die Schwerkraft wirkt eine Trennkraft auf die Phasen, die unterschiedliche Dichten haben. Dies führt dazu, dass sich das schwerere Medium (meistens die Flüssigkeit) am Boden des Sammlers ansammelt, während das leichtere Medium (meistens das Gas) sich in der oberen Region des Sammlers befindet.

Ein möglicher Sammler ist ein wärme-gesteuerter Sammler (Heat controlled accumulator, HCA): Ein derartiger Sammler umfasst ein Volumen, das mit Dampf und Flüssigkeit eines einzigen Arbeitsfluids gefüllt ist, ohne dass es eine Membran gibt. Der Druck in einem HCA wird durch einen Heizer kontrolliert.

Ein weiterer möglicher Sammler ist ein druck-gesteuerter Sammler (Pressure controlled accumulator, PCA): Ein derartiger Sammler umfasst ein Volumen, das mechanisch durch einen Kolben oder durch gasförmigen Druck (mit einer Blase oder Membran) unter Druck gesetzt wird.

Der Sammler ist so konstruiert, dass er eine effiziente Trennung und Ansammlung der beiden Phasen ermöglicht. Dies kann durch die Verwendung von Schwerkraftabscheidern, Trennwänden, Trichtern oder anderen speziellen Strukturen erreicht werden. Das Ziel besteht darin, sicherzustellen, dass das Gas und die Flüssigkeit getrennt werden und in separaten Bereichen gesammelt werden, um eine effektive Nutzung oder Weiterverarbeitung zu ermöglichen.

Ein Kondensator ist ein Bauteil oder eine Vorrichtung, die dazu dient, Dampf oder Gas in eine flüssige Phase zu kondensieren. Der Kondensator ist in Fluidverbindung mit dem Sammler, was bedeutet, dass das Kühlmittel zwischen beiden Komponenten zirkulieren kann.

Die Hauptfunktion des Kondensators besteht darin, das Kühlmittel zu kondensieren, indem es Wärme abgibt und somit von einem gasförmigen Zustand in einen flüssigen Zustand übergeht. Dieser Prozess erfolgt in der Regel durch Abkühlung des Dampfes oder Gases, indem es über den Kondensator mit einem Medium in Kontakt gebracht wird, das eine niedrigere Temperatur hat. Diese Abkühlung bewirkt, dass sich die Moleküle des Dampfes oder Gases zusammenziehen und kondensieren, wodurch sie in flüssiger Form gesammelt werden.

Darüber hinaus ist der Kondensator so eingerichtet, dass er das Kühlmittel unterkühlen kann. Unterkühlung bedeutet, dass die Temperatur des kondensierten Kühlmittels unterhalb seines Sättigungspunktes liegt, also unterhalb der Temperatur, bei der es normalerweise kondensieren würde. Dies ermöglicht es dem Kühlmittel, mehr Wärme aufzunehmen, bevor es erneut verdampft oder weitergeleitet wird. Die Unterkühlung ist wichtig, um Kavitation an der Pumpe zu vermeiden.

Eine Pumpe ist ein Gerät oder eine Vorrichtung, die dazu dient, Flüssigkeiten oder Gase von einem Ort zum anderen zu fördern oder zu bewegen. Im vorliegenden Fall ist die Pumpe speziell eingerichtet, um das unterkühlte Kühlmittel zu fördern.

Die Hauptfunktion einer Pumpe besteht darin, mechanische Energie auf das Kühlmittel auszuüben, um es entlang einer Leitung oder durch ein System zu bewegen. Die Pumpe erzeugt einen Druck- oder Fließgradienten, der das Kühlmittel aus einem niedrigeren Druckbereich zu einem höheren Druckbereich fördert. Dies geschieht durch das Übertragen von kinetischer Energie oder durch das Ändern des Volumens der Pumpe, um das Kühlmittel anzusaugen und es dann in die gewünschte Richtung zu drücken.

Im spezifischen Fall des unterkühlten Kühlmittels wird die Pumpe so konfiguriert, dass sie die flüssige Phase des Kühlmittels aufnimmt und es entlang des Systems transportiert. Die Pumpe muss in der Lage sein, mit dem niedrigen Druck des unterkühlten Kühlmittels umzugehen und genügend Druck aufzubauen, um es durch das System zu fördern. Dies ermöglicht eine kontinuierliche Zirkulation des unterkühlten Kühlmittels, um die gewünschte Kühlwirkung aufrechtzuerhalten.

Es gibt verschiedene Arten von Pumpen, die für unterschiedliche Anwendungen und Fluide geeignet sind, wie zum Beispiel Zentrifugalpumpen, Kolbenpumpen oder Schraubenpumpen. Die Auswahl der richtigen Pumpe hängt von den spezifischen Anforderungen des Systems ab, einschließlich des Flussvolumens, des Druckbereichs und der Art des Kühlmittels.

Eine Bypass-Leitung ist eine Leitung oder ein Rohr, das in Fluidverbindung mit einem Kühlmitteleingang und einem Kühlmittelausgang steht und dazu dient, warmes Kühlmittel direkt zu kaltem Kühlmittel zu führen, ohne dass es durch den Hauptweg des Kühlkreislaufs fließen muss. Die Bypass-Leitung ermöglicht es, eine gezielte Umgehung des normalen Kühlkreislaufs zu erreichen und das warme Kühlmedium direkt zum kalten Kühlmedium zu leiten.

Dadurch kann eine schnelle und effiziente Wärmeübertragung ermöglicht werden, um die Temperatur des Kühlmediums effektiv zu erhöhen. Die Bypass-Leitung kann in verschiedenen Anwendungen eingesetzt werden, um eine gezielte Kühlung oder eine spezielle Temperaturregelung zu ermöglichen und einen Vorwärmer/Rekuperator verzichtbar zu machen.

Gemäß einer Ausführungsform weist die Bypass-Leitung ein Regelventil, insbesondere ein Thermostatventil, auf.

Eine Bypass-Leitung in Verbindung mit einem Regelventil bietet verschiedene Vorteile für das Kühlungssystem. Das Regelventil agiert als Regelventil und ermöglicht die präzise Steuerung des Kühlkreislaufs basierend auf der Temperatur. Dadurch wird eine effektive Temperaturregelung gewährleistet.

Ein Hauptvorteil besteht in der präzisen Temperaturregelung. Das Regelventil ermöglicht die genaue Einstellung der Kühlwassertemperatur durch die Regelung des Durchflusses des Kühlmediums in der Bypass-Leitung. Dies gewährleistet eine optimale Betriebstemperatur und verbessert die Effizienz des Systems.

Ein weiterer Vorteil ist die schnelle Reaktionszeit des Regelventils. Es kann rasch auf Temperaturänderungen reagieren und den Durchfluss des Kühlmediums entsprechend anpassen. Dadurch kann das System schnell auf sich ändernde Betriebsbedingungen reagieren und Überhitzung oder Unterkühlung vermeiden.

Die Verwendung einer Bypass-Leitung in Verbindung mit einem Regelventil kann auch zu Energieeinsparungen führen. Das Regelventil regelt den Kühlkreislauf gezielt und leitet das Kühlmedium direkt vom Kühlmittelausgang zum Kühlmitteleingang. Dadurch wird der Durchfluss im restlichen System reduziert, was zu einer effizienteren Kühlung und Einsparungen bei der Energie führt.

Des Weiteren kann die Verwendung eines Regelventils die Lebensdauer der Komponenten im Kühlkreislauf verlängern. Durch die präzise Temperaturregelung und die Vermeidung von Überhitzung oder Unterkühlung werden die Komponenten geschont und ihre Zuverlässigkeit und Lebensdauer verbessert.

Durch die Kombination aus Bypass-Leitung und Regelventil wird das Kühlungssystem flexibler und anpassungsfähiger. Das Regelventil ermöglicht die Einstellung verschiedener Temperaturbereiche und Kühlungsstufen, um den unterschiedlichen Betriebsbedingungen gerecht zu werden.

Ein weiterer Vorteil besteht in der Zuführung von Gasblasen im Zustrom zum Kühlmitteleinlass der Brennstoffzelle, welche mehrere Vorteile bieten, um Siedeverzug des Kühlmittels entgegenzuwirken. Sie helfen dabei, die Oberflächenspannung zu verringern, was zu einem effektiveren Wärmeaustausch bei höheren Temperaturen führt

Insgesamt bietet die Verwendung einer Bypass-Leitung mit einem Regelventil eine präzise und effiziente Kühlung mit einer verbesserten Kontrolle über die Betriebstemperatur. Dies führt zu einer besseren Leistung, Masseeinsparungen und einer längeren Lebensdauer des Systems.

Gemäß einer Ausführungsform weist die Bypass-Leitung ein Vorheizmodul auf.

Eine Bypass-Leitung mit einem Vorheizmodul ist eine Konfiguration im Kühlungssystem, die zusätzliche Vorteile bietet. Das Vorheizmodul ist eine Komponente, die in die Bypass-Leitung integriert ist und dazu dient, das Kühlmedium vorzuwärmen, bevor es in den Hauptkühlkreislauf zurückgeführt wird. Hier sind die Definition und die Vorteile dieser Konfiguration:
Die Bypass-Leitung ist eine Verbindung zwischen dem Kühlmittelausgang und dem Kühlmitteleingang, die parallel zum Hauptkühlkreislauf verläuft. Das Vorheizmodul ist eine Einheit innerhalb der Bypass-Leitung, die speziell entwickelt wurde, um das Kühlmedium vorzuwärmen.

Ein weiterer Vorteil ist die Reduzierung von Kondensationsproblemen. In bestimmten Situationen, insbesondere bei kühleren Temperaturen oder hoher Luftfeuchtigkeit, kann es zu Kondensation im Kühlkreislauf kommen. Durch das Vorheizmodul wird das Kühlmedium auf eine höhere Temperatur gebracht, wodurch das Risiko von Kondensation verringert wird, und die Leistung des Systems stabilisiert wird.

Die Verwendung eines Vorheizmoduls in der Bypass-Leitung ermöglicht auch eine schnellere Aufheizzeit des Kühlkreislaufs. Da das Medium bereits vorgewärmt ist, bevor es in den Hauptkühlkreislauf gelangt, erreicht das System schneller die gewünschte Betriebstemperatur. Dies ist besonders vorteilhaft beim Kaltstart des Systems oder bei der Erholung nach einem Abschalten.

Ein weiterer Vorteil besteht in der Möglichkeit der Temperaturregelung. Das Vorheizmodul kann mit einem Regelventil ausgestattet sein, das die Durchflussmenge oder die Temperatur des vorgewärmten Kühlmediums steuert. Dadurch kann die Betriebstemperatur des Systems präzise gesteuert und an die spezifischen Anforderungen angepasst werden.

Zusammenfassend bietet eine Bypass-Leitung mit Vorheizmodul eine verbesserte thermische Effizienz, reduzierte Kondensationsprobleme, eine schnellere Aufheizzeit und präzise Temperaturregelung. Diese Konfiguration kann zu einer optimierten Leistung und Masseeffizienz des Kühlungssystems führen und gleichzeitig eine stabilere Betriebsumgebung gewährleisten.

Gemäß einer Ausführungsform weist die Brennstoffzelle ein Brennstoffzellenstapel mit einem Medienmodul auf, und dieses Medienmodul umfasst die Bypass-Leitung und die Pumpe.

Gemäß einer Ausführungsform ist die Brennstoffzelle ein Brennstoffzellenstapel mit mindestens einer Grundplatte, und die Grundplatte weist die Bypass-Leitung und die Pumpe auf.

Gemäß einer Ausführungsform umfasst das Kühlmittel Methanol und/oder Ethanol.

Methanol und Ethanol bieten als Kühlmittel verschiedene Vorteile. Beide Substanzen weisen haben sie einen niedrigeren Siedepunkt, wodurch sie bei höheren Temperaturen verdampfen können und somit eine bessere Kühlung ermöglichen.

Ein weiterer Vorteil liegt in der geringen Viskosität von Methanol im Vergleich zu Wasser. Dadurch wird der Durchfluss erleichtert und der Energieverbrauch der Pumpe verringert.

Ferner weisen Methanol und Ethanol eine hohe Verdampfungsenthalpie auf. Dadurch können sehr kleine Massenströme im System realisiert werden, wodurch Druckverlust reduziert wird. Dadurch können Leitungen und Pumpen kleiner dimensioniert werden als mit der Flüssigkeitskühlung, was zu einer Einsparung des Gewichts System führt.

Gemäß einem Aspekt umfasst ein Luftfahrzeug ein Brennstoffzellensystem der genannten Bauart.

Gemäß einer Ausführungsform weist das Brennstoffzellensystem ferner einen Ejektor auf, wobei der Ejektor mit dem ersten Abschnitt des Sammlers, dem zweiten Abschnitt des Sammlers, der Pumpe, dem Kondensator und der Brennstoffzelle in Fluidverbindung steht und eingerichtet ist, das Kühlmittel in der Gasphase aus dem Sammler mit dem unterkühlten Kühlmittel aus dem Kondensator zu vermengen und der Brennstoffzelle zuzuführen.

Die Hauptfunktion des Ejektors besteht darin, das Kühlmittel in der Gasphase aus dem ersten Abschnitt des Sammlers mit dem unterkühlten Kühlmittel aus dem Kondensator zu vermengen und anschließend der Brennstoffzelle zuzuführen. Der Ejektor nutzt den Druckunterschied zwischen den beiden Fluiden, um das Kühlmittel in der Gasphase anzusaugen und mit dem unterkühlten Kühlmittel zu vermischen.

Der Ejektor spielt eine entscheidende Rolle bei der Vermengung und Zuführung des Kühlmittels in der Gasphase mit dem unterkühlten Kühlmittel im System. Er ermöglicht eine effiziente Nutzung der vorhandenen Druckdifferenz und gewährleistet eine gleichmäßige Verteilung des Kühlmittels zur Kühlung der Brennstoffzelle.

Ein weiterer Vorteil besteht in der Bildung von Gasblasen im Kühlmittelsystem welche vorteilhaft sind, um Siedeverzug des Kühlmittels entgegenzuwirken. Sie helfen dabei, die Oberflächenspannung zu verringern, was zu einem effektiveren Wärmeaustausch bei höheren Temperaturen führt.

Gemäß einer Ausführungsform weist das Brennstoffzellensystem ferner zwischen Kühlmitteleinlass und Kühlmittelauslass ein thermisch leitendes Element auf, wobei das thermische leitende Element eingerichtet ist Wärme von Kühlmittelauslass zu Kühlmitteleinlass zu übertragen.

Der Hauptvorteil eines thermisch leitenden Elements zwischen dem Kühlmitteleinlass und dem Kühlmittelauslass besteht in der effizienten Wärmeübertragung. Durch die Verwendung eines thermisch leitenden Elements kann die im Kühlmittelauslass vorhandene Wärme, effektiv auf den Kühlmitteleinlass übertragen werden. Dadurch wird die Wärmeabfuhr verbessert und die Temperatur im Kühlkreislauf stabilisiert, indem die Kühlflüssigkeit vorgewärmt wird.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig. 1**: ein Brennstoffzellensystem;
- **Fig. 2**: ein weiteres Brennstoffzellensystem;
- **Fig. 3**: ein weiteres Brennstoffzellensystem;
- **Fig. 4**: ein Luftfahrzeug.

### Detaillierte Beschreibung von Ausführungsbeispielen

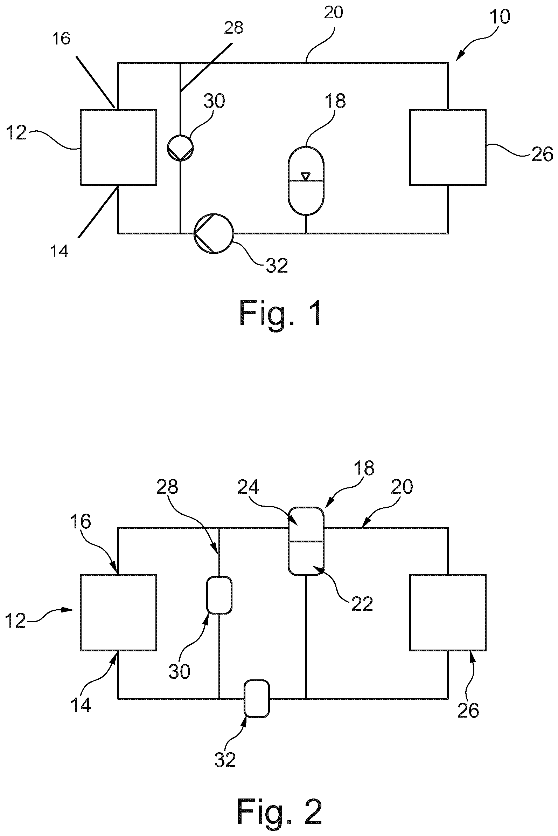

Fig. 1 zeigt ein Brennstoffzellensystem 10 mit einem Zwei-Phasen-Kühlsystem. Das System umfasst mindestens eine Brennstoffzelle 12, die einen Kühlmitteleingang 14 und einen Kühlmittelausgang 16 hat. Eine Bypass-Verbindung 28 zwischen dem Kühlmitteleingang und dem Kühlmittelausgang ermöglicht den Fluss des Kühlmittels.

Das System 10 beinhaltet auch einen Sammler 18, der mit der Brennstoffzelle 12 in Flüssigkeitsverbindung steht. Der Sammler ist so konstruiert, dass er das aus der Brennstoffzelle strömende Kühlmittel aufnimmt und das Kühlmittelsystem 10 bedruckt.

Zusätzlich umfasst das System 10 einen Kondensator 26, der mit dem Sammler 18 in Flüssigkeitsverbindung steht. Der Kondensator kondensiert und unterkühlt das Kühlmittel, um eine effiziente Kühlung zu gewährleisten.

Das System verfügt auch über eine Bypass-Leitung 28 mit einer Pumpe 30. Durch diese Bypass-Leitung steht der Kühlmitteleingang 14 in Verbindung mit dem Kühlmittelausgang 16.

Ferner umfasst das gezeigte Beispiel die Kondensatorpumpe 32, die eingerichtet das Kühlmittel 20 zu befördern.

Die Bypass-Leitung 28 ermöglicht es, eine gezielte Umgehung des normalen Kühlkreislaufs zu erreichen und das warme Kühlmedium direkt zum kalten Kühlmedium zu leiten.

Dadurch kann eine schnelle und effiziente Wärmeübertragung ermöglicht werden, um die Temperatur des Kühlmediums effektiv zu senken. Die Bypass-Leitung 28 kann in verschiedenen Anwendungen eingesetzt werden, um eine gezielte Kühlung oder eine spezielle Temperaturregelung zu ermöglichen und einen Vorwärmer/Rekuperator verzichtbar zu machen.

Fig. 2 zeigt eine weitere Ausführungsform eines Brennstoffzellensystems 10 das mit einem effizienten Zwei-Phasen-Kühlsystem ausgestattet ist. Das System umfasst mindestens eine Brennstoffzelle 12, die einen Kühlmitteleingang 14 und einen Kühlmittelausgang 16 hat. Eine Verbindung zwischen dem Kühlmitteleingang und dem Kühlmittelausgang ermöglicht den Fluss des Kühlmittels.

Das System 10 beinhaltet auch einen Sammler 18, der mit der Brennstoffzelle 12 in Flüssigkeitsverbindung steht. Der Sammler ist so konstruiert, dass er das aus der Brennstoffzelle strömende Kühlmittel aufnimmt. Dabei wird das Kühlmittel im ersten Abschnitt des Sammlers 22 in einer Gasphase gehalten, während es im zweiten Abschnitt 24 in flüssiger Phase vorliegt.

Zusätzlich umfasst das System 10 einen Kondensator 26, der mit dem Sammler 18 in Flüssigkeitsverbindung steht. Der Kondensator kondensiert und unterkühlt das Kühlmittel, um eine effiziente Kühlung zu gewährleisten.

Das System verfügt auch über eine Bypass-Leitung 28 mit einer Pumpe 30. Durch diese Bypass-Leitung steht der Kühlmitteleingang 14 in Verbindung mit dem Kühlmittelausgang 16.

Ferner umfasst das gezeigte Beispiel eine Kondensatpumpe 32, die eingerichtet das Kühlmittel 20 zu befördern.

Die Bypass-Leitung 28 ermöglicht es, eine gezielte Umgehung des normalen Kühlkreislaufs zu erreichen und das warme Kühlmedium direkt zum kalten Kühlmedium zu leiten.

Dadurch kann eine schnelle und effiziente Wärmeübertragung ermöglicht werden, um die Temperatur des Kühlmediums effektiv zu senken. Die Bypass-Leitung 28 kann in verschiedenen Anwendungen eingesetzt werden, um eine gezielte Kühlung oder eine spezielle Temperaturregelung zu ermöglichen und einen Vorwärmer/Rekuperator verzichtbar zu machen.

Der wesentliche Unterschied zu der Ausführungsform von Figur 1 ist, dass der Sammler in Verbindung mit der Rückführungslinie ist und sich dadurch die Gasphase mit der Flüssigphase vermischen können.

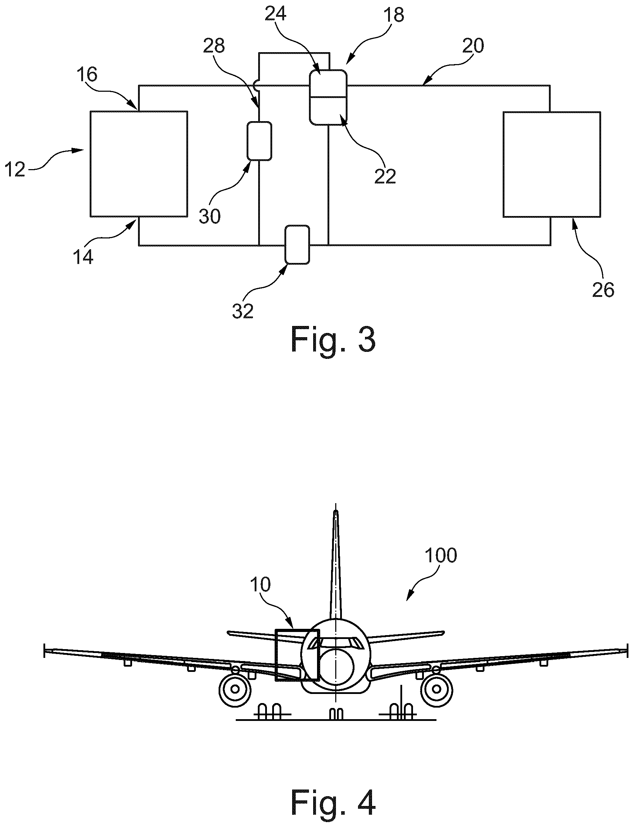

Fig. 3 zeigt eine weitere Ausführungsform eines Brennstoffzellensystems 10 das mit einem effizienten Zwei-Phasen-Kühlsystem ausgestattet ist. Das Brennstoffzellensystem 10 umfasst ebenfalls mindestens eine Brennstoffzelle 12, die einen Kühlmitteleinlass 14 und einen Kühlmittelauslass 16 aufweist.

Der wesentliche Unterschied zu der Ausführungsform zu Figur 1 und Figur 2 ist eine Phasentrennung im Sammler und die gezielte Einspritzung der Dampfphase über den Ejektor zum Einlass der Brennstoffzelle hin.

Fig. 4 zeigt ein Luftfahrzeug 100 mit einem beschriebenen Brennstoffzellensystem 10.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Brennstoffzellensystem
- 12: Brennstoffzelle
- 14: Kühlmitteleingang
- 16: Kühlmittelausgang
- 18: Sammler
- 20: Kühlmittel
- 22: erster Abschnitt
- 24: zweiter Abschnitt
- 26: Kondensator
- 28: Bypass-Leitung
- 30: Pumpe
- 32: Kondenatpumpe
- 100: Luftfahrzeug

## Patentansprüche

1. Brennstoffzellensystem (10) mit einem Zwei-Phasen-Kühlsystem, aufweisend:
mindestens eine Brennstoffzelle (12) mit einem Kühlmitteleingang (14) und
einem Kühlmittelausgang (16),
einen Kondensator (26), wobei der Kondensator (26) eingerichtet ist, ein Kühlmittel (20) zu kondensieren und zu unterkühlen,
eine Kondensatpumpe (32), wobei die Kondensatpumpe (32) eingerichtet ist das unterkühlte Kühlmittel (20) zu fördern,
eine Bypass-Leitung (28),
wobei die Bypass-Leitung (28) mit dem Kühlmittelausgang (16) und dem Kühlmitteleingang (14) in Fluidverbindung steht und eingerichtet ist, das Kühlmittel der Brennstoffzelle (12) mittels einer Pumpe (30) zurückzuführen.

2. Brennstoffzellensystem (10) nach Anspruch 1, ferner aufweisend:
einen Sammler (18), wobei im Sammler (18) eine Phasentrennung in Gas- und
Flüssigphase stattfindet, wobei der Sammler (18) mit der Brennstoffzelle (12) in Fluidverbindung steht und eingerichtet ist, aus der Brennstoffzelle strömendes Kühlmittel (20) in einer flüssigen Phase in einem ersten Abschnitt (22) und einer Gasphase in einem zweiten Abschnitt (24) zu beinhalten,

3. Brennstoffzellensystem (10) nach einem der vorhergehenden Ansprüche, wobei die Bypass-Leitung (28) ein Regelventil aufweist.

4. Brennstoffzellensystem (10) nach einem der vorhergehenden Ansprüche, wobei die Bypass-Leitung (28) ein Vorheizmodul aufweist.

5. Brennstoffzellensystem (10) nach einem der vorhergehenden Ansprüche, wobei die Brennstoffzelle (12) ein Brennstoffzellenstapel mit einem Medienmodul aufweist, und dieses Medienmodul die Bypass-Leitung (28) und die Pumpe (30) aufweist.

6. Brennstoffzellensystem (10) nach einem der vorhergehenden Ansprüche, wobei die Brennstoffzelle (12) ein Brennstoffzellenstapel mit mindestens einer Grundplatte ist, und die Grundplatte die Bypass-Leitung (28) und die Pumpe (30) aufweist.

7. Brennstoffzellensystem (10) nach einem der vorhergehenden Ansprüche, wobei das Kühlmittel (20) Methanol und/oder Ethanol umfasst.

8. Luftfahrzeug (100) mit einem Brennstoffzellensystem (10) nach einem der vorhergehenden Ansprüche.
